# EUROPÄISCHE PATENTANMELDUNG

(11) **EP 1 524 070 A1**
(43) Veröffentlichungstag der Anmeldung: **20.04.2005**
(21) Anmeldenummer: 04023785.1
(22) Anmeldetag: 06.10.2004
(51) Int. Cl.: B23Q 11/00

(54) **Produktionslinie**

(30) Priorität: 10.10.2003 DE 10347913
(71) Anmelder: Grob-Werke Burkhart Grob e.K., 87719 Mindelheim (DE)
(72) Erfinder: Grob, Burkhart Dr. h.c., 86825 Bad Wörishofen (DE); Kienle Anton, 87775 Salgen (DE); Martens, Knut, 87719 Mindelheim (DE)
(74) Vertreter: Pfister, Stefan, Dipl.-Phys.

(57) **Zusammenfassung**

Die Erfindung betrifft eine Produktionslinie bestehend aus mindestens zwei auf dem Boden stehenden Bearbeitungsmaschinen, wobei zumindest zwischen den beiden Bearbeitungsmaschinen eine Vorrichtung für die Leitung von Spül- und Kühlflüssigkeiten vorgesehen ist. Die Vorrichtung ist dabei im Wesentlichen abgeschlossen und dicht ausgebildet. Sie ist im Bereich der Bearbeitungsmaschine mit Anschlüssen ausgestattet. Die Vorrichtung ist auf bzw. über dem Boden oder über dem Niveau der Aufstellfläche der Bearbeitungsmaschinen angeordnet.

## Beschreibung

Die Erfindung betrifft eine Produktionslinie, bestehend aus mindestens zwei auf dem Boden stehende Bearbeitungsmaschinen, wobei zumindest zwischen den beiden Bearbeitungsmaschinen eine Vorrichtung für die Leitung von Spül- bzw. Kühlflüssigkeit vorgesehen ist.

In Produktionslinien, zum Beispiel in Transferstraßen oder bei verketteten Bearbeitungszentren ist es bekannt, zentrale Verund Entsorgungssysteme vorzusehen. Zum Beispiel wird in einer zentralen Anlage die Spül- und Kühlflüssigkeit aufbereitet, die bei einem zerspanenden Bearbeitungsprozeß benötigt wird. Die Spül- bzw. Kühlflüssigkeit dient dabei zum Kühlen des Werkzeuges einerseits und zum Wegschwemmen von abgearbeiteten Spänen andererseits.

Diese Spül- und Kühlflüssigkeit ist dann aus der Bearbeitungsmaschine entsprechend zu entsorgen und abzuleiten. Günstigerweise weisen dabei die jeweiligen Bearbeitungsmaschinen vorteilhafte Ausgestaltungen auf, damit Späne und sonstige Verunreinigungen zuverlässig aus der Bearbeitungsmaschine abgeleitet werden.

Hierzu sind Vorrichtungen für die Leitung von Spül- bzw. Kühlflüssigkeiten vorgesehen.

Im Stand der Technik ist es hierzu bekannt, offene Spülrinnen zwischen den Bearbeitungsmaschinen anzuordnen.

Der Einsatz von offenen Spülrinnen erlaubt die Einleitung von Spül- und Kühlflüssigkeit am beliebigen Ort. Nachteilig bei dieser Ausgestaltung ist allerdings, daß die Spülrinne nie komplett gefüllt werden kann, da ein Überschwappen der Spülund Kühlflüssigkeit droht, da die Oberfläche der Spül- und Kühlflüssigkeit immer aufgrund der weiter eingeleiteten Spülund Kühlflüssigkeit bei den Bearbeitungsmaschinen unruhig ist. Es wird bei diesen Anordnungen also der mögliche Strom von Spül- und Kühlflüssigkeit nicht voll ausgenutzt. Auch ist der Flüssigkeitsverlust der offen geführten Rinnen nicht unbeachtlich, da in den Werkhallen, in welchen die Produktionslinien aufgestellt sind, doch erhebliche Temperaturen bestehen können und die Verdunstungsverluste erheblich sein können.

Des Weiteren ist es bekannt, Vorrichtungen für die Leitung von Spül- und Kühlflüssigkeiten im Hallenboden in speziell vorgesehenen Gräben oder Kanälen, die gegebenenfalls abdeckbar sind, einzubauen. Hier werden die bekannten Rinnen einfach in einen Kanal im Fußboden verlegt und mit entsprechenden Bodenplatten verdeckt. Der Verlust von Spül- und Kühlflüssigkeit aufgrund von Verdunstung ist hier bereits reduziert, jedoch sind solche Anordnungen in anderer Weise mehrfach von Nachteil.

Die Produktionslinien weisen ein erhebliches Gewicht auf und das Fundament der Halle muß entsprechend stabil ausgebildet werden. Der Graben aber schwächt das Fundament und es müssen entsprechende Vorkehrungen getroffen werden, um dies zu kompensieren, was zu erheblich höheren Kosten bei der Herstellung der Halle, in welcher die Produktionslinie aufzustellen ist, führt. Des Weiteren bindet die Anordnung des in den Boden gelegten Kanals die Nutzbarkeit der Halle. Wird zum Beispiel ein Umzug einer entsprechenden Produktionslinie geplant, so kann diese nur im Bereich dieses Kanals aufgebaut werden, was unweigerlich zu Nachteilen führen wird, da diese Infrastruktur nicht kostengünstig entsprechend umgestellt werden kann.

Ein weiterer Nachteil bei den Anordnungen der Vorrichtung in einem im Boden vorgesehenen Kanal ist im Fall von Leckagen gegeben. In diesem Fall läuft die Spül- und Kühlflüssigkeit unter Umständen unbemerkt in das Fundament der Bodenplatte oder in das Erdreich aus und kann zu entsprechenden Schäden führen. Um dies zu vermeiden, sind die im Boden vorgesehenen Kanäle verhältnismäßig aufwendig und daher auch teuer.

Es sind auch Spänetransportsysteme bekannt, die zumindest einen Teil von Kühl- beziehungsweise Spülflüssigkeit mit aufnehmen können. Derartige Systeme sind aber ebenfalls dadurch gekennzeichnet, daß sie nicht geschlossen ausgebildet sind. Dadurch ist es möglich, das Teile der Kühl- beziehungsweise Spülflüssigkeit verdunsten beziehungsweise durch Spritzen beim Einleiten in den Sammelkanal Kühl- beziehungsweise Spülflüssigkeit auf den Boden der Produktionshalle gelangen könnte. Die bekannten Systeme sind dabei so ausgebildet, daß ein Sammelkanal auf einem Höhenniveau angeordnet ist, der eine zusätzliche Aufstellung beziehungsweise Befestigungsmöglichkeit erfordert, was die gesamte Angelegenheit teurer macht.

Andere Systeme sind bekannt, die sich ebenfalls durch eine teilweise offene Kanalführung und Zuleitung für die Späne und gegebenenfalls die Kühl- beziehungsweise Spülflüssigkeit auszeichnen. Dabei ist eine abgestufte Ausbildung vorgesehen, derart, daß die Verbindung von Kanalteilen für die einzelnen Bearbeitungsmaschinen sehr aufwendig gestaltet ist und daß dadurch insbesondere die Gefahr von Verstopfungen beziehungsweise Stauungen im abgewinkelten Bereich entstehen. Die bekannte Vorrichtung aus dem Stand der Technik ist außerdem zum Abtransport von Spänen konzipiert. Dadurch ist es nicht oder nur bedingt mit erheblichem maschinentechnischem Aufwand möglich, Kühl- oder Spülflüssigkeit in einer solchen bekannten Vorrichtung abzuleiten.

Die Erfindung hat es sich zur Aufgabe gemacht, eine Produktionslinie wie eingangs beschrieben zur Verfügung zu stellen, deren Vorrichtung für die Ableitung von Spül- bzw. Kühlflüssigkeit möglichst flexibel und effizient ist.

Gelöst wird diese Aufgabe durch eine Produktionslinie wie eingangs beschrieben, bei welcher die Vorrichtung im Wesentlichen abgeschlossen und dicht ausgebildet ist, die im Bereich der Bearbeitungsmaschine Anschlüsse aufweist und die Vorrichtung auf dem Boden oder über dem Niveau der Aufstellfläche angeordnet ist.

Durch die geschlossene, dichte Ausgestaltung der Vorrichtung wird erreicht, daß der Füllgrad der Vorrichtung gegenüber den offenen Rinnen erheblich erhöht werden kann, da kein Überschwappen am oberen Rand der sonst offenen Rinne mehr droht.

Die Gefahr eines Überschwappens ist durch die erfindungsgemäße Ausgestaltung gebannt. Der zur Verfügung stehende Querschnitt für die Leitungsvorrichtung kann effizient und vollständig für die Leitung von Spül- und Kühlflüssigkeit eingesetzt werden, ohne Gefahr zu laufen, durch auslaufende Spül- und Kühlflüssigkeit den Hallenboden zu verunreinigen oder Spül- und Kühlflüssigkeit zu verlieren. Gleichzeitig werden auch durch die geschlossene Ausgestaltung die Verdunstungsverluste erheblich reduziert. Da die Leitungsvorrichtung nicht im Boden angeordnet ist, sondern auf oder über den Boden, ist die erfindungsgemäß ausgestaltete Produktionslinie auch sehr flexibel, da diese problemlos abgebaut und an anderer Stelle wieder aufgestellt werden kann, und es nicht auf die Anordnung einer entsprechenden Infrastruktur im Hallenboden für den Betrieb der Produktionslinie ankommt. Dabei müssen bezüglich des Hallenbodens keine zusätzlichen Aufwendungen mehr vorgesehen werden, wenn eine Produktionslinie umzubauen ist, da die Produktionslinie bereits die Entsorgungsleitungen für die Spül- und Kühlflüssigkeit der Linie bzw. der in der Linie vorgesehenen Bearbeitungsmaschinen umfaßt.

Gleichzeitig ist die über dem Boden und bevorzugt an der Maschine angeordnete Vorrichtung montage- und wartungsfreundlich, da diese von mehreren Seiten problemlos zugänglich ist. Mögliche Leckagen der Vorrichtung werden dabei unmittelbar erkannt und können entsprechend beseitigt werden.

Ein anlagentechnischer Mehraufwand, wie er zum Beispiel beim Einsatz bekannter Spänefördersysteme erforderlich ist, um überhaupt Spül- bzw. Kühlflüssigkeit damit fördern zu können, erübrigt sich vollständig. So sind beispielsweise Pumpen, zusätzliche Förderleitungen für die Flüssigkeit und Filter- bzw. Siebanlagen zur Gewährleistung einer einwandfreien Funktion des Pumpens bzw. des Abtransportierens der Flüssigkeit erfindungsgemäß nicht erforderlich. Der Einsatz von Spänetransportvorrichtungen bzw. deren Nutzung als Spül- bzw. Kühlmittelabflußsystem erscheint aufgrund der enormen Aufwendungen für die Lösung dieser Aufgabe nicht gegeben. Im Umkehrschluß ist es jedoch möglich, die erfindungsgemäße Vorrichtung mit einem Spänetransportsystem zusätzlich auszustatten.

In einer bevorzugten Ausgestaltung der Erfindung ist vorgesehen, daß die Vorrichtung modular ausgebildet ist. Der modulare Aufbau hat bei der Montage, Wartung bzw. Demontage der Vorrichtung erhebliche Vorteile. Die Anordnung ist dabei so gewählt, daß die Module einzeln austauschbar sind bzw. die Module der jeweiligen Bearbeitungsmaschine zugeordnet sind und so auch der Austausch einer Bearbeitungsmaschine in der Produktionslinie einschließlich der Leitungsvorrichtung problemlos möglich ist.

Bevorzugt werden mindestens zwei verschiedene Modultypen vorgesehen. Zunächst ist ein im Wesentlichen geschlossenes, profilartiges Verbindungsmodul vorgesehen. Dieses bevorzugt rohrartige Verbindungsmodul ist zum Beispiel für eine geschlossene Verbindung der Bearbeitungsmaschinen einsetzbar. Daneben ist es vorgesehen, Anschlußmodule vorzusehen, die mindestens einen Anschluß aufweisen. An dem Anschluß wird die Spül- bzw. Kühlmittel-Entsorgungsleitung der Bearbeitungsmaschine angeschlossen. Dies ist bevorzugt zum Beispiel ein Spänesammeltrichter oder eine Spülrinne. Dabei ist vorgesehen, daß alternativ an einem Anschlußmodul auch mehrere Anschlüsse vorgesehen sind, wenn zum Beispiel von einer Bearbeitungsmaschine mehrere Entsorgungsleitungen wegführen oder aber ein Anschlußmodul für zwei oder mehrere zum Beispiel in Opposition zueinander aufgestellten Bearbeitungsmaschinen dient.

Entsprechend einer Weiterbildung der Erfindung ist es vorgesehen, daß die Vorrichtung als Aufflurkonstruktion auf dem Boden, insbesondere unterhalb der Bearbeitungsmaschine aufstellbar ausgebildet ist. Diese Aufstellbarkeit ist besonders mit Blick auf die effiziente Gestaltung einer Produktionslinie und insbesondere für das Erweitern und/oder Umsetzen einer solchen von hoher Wichtigkeit. Die nach dem Stand der Technik bekannten Lösungen sind entweder im Boden als sogenannte Unterflurkonstruktion oder aber auf besonderen Gestellen neben oder über der Produktionslinie angeordnet. Dies erfordert zum einen einen erheblich höheren Aufwand für die Herstellung einer solchen Vorrichtung und zum anderen ist eine solche Ausgestaltung dann von Nachteil, wenn die Produktionslinie erweitert oder umgesetzt werden soll. Auch beim Umsetzen in eine neue Produktionshalle ist beispielsweise der Aufwand für die Herstellung der Abflußkanäle, wie sie bei den Lösungen nach dem Stand der Technik noch erforderlich sind, äußerst hoch. Auch die geräumte Produktionshalle ist gegebenenfalls bauseitig herzurichten, was ebenfalls nicht unerhebliche Aufwendungen verursacht.

Ein weiterer Aspekt der Erfindung ist dadurch angegeben, daß die Vorrichtung rohrförmig ausgebildet ist. Insbesondere die Ausführung mit einer kreisrunden, rohrförmigen Vorrichtung bietet dabei den Vorteil, daß derartige rohrartige Vorrichtungen sehr einfach aneinandergefügt werden können. Hierzu dienen einfache Rohrkupplungen. Beispielsweise ist es auch möglich, sehr dicht ausgebildete Schnellkupplungen vorzusehen, mittels derer einzelne Vorrichtungsteile aneinandergefügt werden können. Auch die Instandhaltung einer solchen Ausgestaltung ist wesentlich vereinfacht. Der Hauptvorteil einer rohrförmigen Ausgestaltung liegt allerdings in der Produktion. Dort können nicht unerhebliche Kosten eingespart werden, indem derartige rohrförmige Vorrichtungen in Form von Vorrichtungsmodulen oder -segmenten gefertigt werden.

Von Vorteil ist es, wenn, entsprechend einer Weiterbildung der erfindungsgemäßen Produktionslinie eine erste Gruppe von einigen Bearbeitungsmaschinen an einer ersten, insbesondere rohrförmigen Vorrichtung angeschlossen ist. Die Vorrichtung ist dabei als sogenannte Ein-Rohr-Ausführung vorgesehen. Eine Ein-Rohr-Ausführung ist dabei so zu verstehen, daß ein zentraler Sammel- beziehungsweise Abflußkanal der Vorrichtung als ein einziges Rohr ausgeführt ist. In dieser Vorrichtung als Ein-Rohr-Ausführung können Bearbeitungsmaschinen beziehungsweise deren Abflußleitungen eingebunden werden. Je nachdem, wie hoch die Kapazität der Vorrichtung ausgebildet sein muß, ist dabei der Durchmesser der Vorrichtung zu bemessen.

Reicht eine Ein-Rohr-Ausführung nicht mehr aus, ist es erfindungsgemäß vorgesehen, daß zwei oder mehrere Gruppen von Bearbeitungsmaschinen je an eine eigene Vorrichtung, bevorzugt getrennt von den anderen Vorrichtungen angeschlossen ist und diese Vorrichtungen zumindest abschnittsweise parallel, insbesondere gebündelt verlaufend angeordnet sind. Man kann diese Ausbildung auch als eine Ein-Plus-X-Rohr-Ausführung der Vorrichtung bezeichnen. Dabei kann man am Anfang der Vorrichtung eine Ein-Rohr-Ausführung vorsehen, die sich dann zum Ende beziehungsweise zur Mitte der Produktionslinie hin auf eine Zwei- beziehungsweise Mehr-Rohr-Ausführung erweitert. Dies richtet sich nach den jeweiligen Bearbeitungsaufgaben und der dabei anfallenden Kühl- beziehungsweise Spülflüssigkeitsmenge. Selbstverständlich ist es nach einer Variante der Erfindung vorgesehen, daß ein Erweiterungsmodul zum Anschluß von zwei beziehungsweise mehreren Vorrichtungen vorgesehen ist. Durch ein solches Erweiterungsmodul besteht dann die Möglichkeit, zunächst kleinere Durchmesser zu verwenden, um dann, wenn die entsprechende Durchflußmenge erreicht ist, einen größeren Durchmesser an das Erweiterungsmodul anzuschließen. Dabei ist dieses Erweiterungsmodul nicht nur zum Anschluß auf zwei derartige Vorrichtungen beschränkt, sondern vielmehr auf eine Vielzahl des Einbindens von Vorrichtungen erweiterbar.

Als Vorteil hat es sich erwiesen, wenn das Erweiterungsmodul abgewinkelt, insbesondere segmentartig abgewinkelt ausgebildet ist. Dadurch läßt sich dieses Erweiterungsmodul an bestimmten Stellen der Produktionslinie anordnen, wo eine Umleitung der Kühl- beziehungsweise Spülflüssigkeit erforderlich ist. Beispielsweise kann diese Umlenkung auch dazu dienen, um zwei oder mehrere Vorrichtungen parallel zueinander angeordneter Fertigungs- beziehungsweise Produktionslinien miteinander zu verbinden.

Eine Weiterbildung der Erfindung schlägt vor, daß ein Endmodul vorgesehen ist, welches alle Vorrichtungen der Produktionslinie aufnimmt. In diesem Endmodul kann beispielsweise dann eine Abführ- beziehungsweise Abpumpvorrichtung in einen zentralen Sammelbehälter beziehungsweise in eine Aufbereitungsanlage für die Kühl- beziehungsweise Spülflüssigkeit vorgesehen sein.

Im Bereich der Bearbeitungsmaschine sind die Vorrichtungen beziehungsweise die Anschlüsse der Vorrichtungen durch Zuläufe mit der Vorrichtung selbst verbunden. Dadurch ist eine dichte und problemlose Verbindung zwischen der Bearbeitungsmaschine und der Vorrichtung selbst gegeben.

Von Vorteil ist es dabei, wenn ein Auffangmodul zur Verbindung der Vorrichtung mit der Bearbeitungsmaschine vorgesehen ist.

Dieses Auffangmodul ist entsprechend einer Weiterbildung der Erfindung als Grundwanne ausgebildet, in das die Kühl- oder Spülflüssigkeit einleitbar ist. Die Ausbildung als Grundwanne ist bevorzugt, da dadurch das Verspritzen und Entweichen und auch unnötige Verdunstungen von Kühl- oder Spülflüssigkeit vermieden werden.

Eine bevorzugte Weiterbildung der Erfindung sieht vor, daß die Grundwanne zweiteilig, insbesondere als Ausführung mit einer Spülwanne in einer Grundwanne vorgesehen ist. Damit wird erreicht, daß eine zusätzliche Sicherheit bezüglich austretender Kühl- beziehungsweise Spülflüssigkeit erreicht wird. Insbesondere ist es gegeben, daß die aus der Spülwanne überlaufende Kühl- beziehungsweise Spülflüssigkeit dann in der Grundwanne noch aufgefangen werden kann. Entsprechend den fertigungstechnischen Anforderungen und insbesondere den Anforderungen bezüglich des Umweltschutzes ist es wirksam zu vermeiden, daß Kühl- oder Spülflüssigkeit den Boden der Fertigungshalle kontaminiert. Insofern ist diese doppelte Sicherheit in Form der Ausbildung als Grundwanne mit einer integrierten Spülwanne von besonderem Vorteil.

Eine Weiterbildung der Erfindung sieht vor, daß die Spülwanne zumindest im Einleitungsbereich für die Kühl- beziehungsweise Spülflüssigkeit beziehungsweise auf der der Bearbeitungsmaschine zugewandten Seite W-förmig ausgebildet ist. Durch diese W-Form wird zum einen ein günstiger Abfluß der Spülbeziehungsweise Kühlflüssigkeit erreicht. Des Weiteren ist eine nach unten wesentliche dichte Ausbildung gegeben, so daß Kühlbeziehungsweise Spülflüssigkeit nicht verspritzen kann.

Die Spülwanne und die Grundwanne sind in Richtung der Vorrichtung geneigt ausgebildet. Dabei ist es von besonderem Vorteil, wenn die Neigung mit einem sehr geringen Gefälle gewählt wird. Bereits eine äußerst geringe Neigung der Spülwanne beziehungsweise der Grundwanne reicht aus, um einen ordnungsgemäßen und sicheren Abfluß der Kühl- beziehungsweise Spülflüssigkeit zu gewährleisten.

Der W-förmige Einleitungsbereich der Spülwanne kann nach einer Ausbildung der Erfindung auch von zwei V-Rinnen gebildet sein. Der Vorteil ist der Gleiche wie zuvor beschrieben.

Erfindungsgemäß wurde gefunden, daß es von Vorteil ist, wenn der Zulauf als abgewinkeltes Zwischenstück zur Verbindung mit der Vorrichtung vorgesehen ist. Diese Abwinklung insbesondere in Richtung des Abflusses gewährleistet einen zügigen und problemlosen Abfluß der Kühl- beziehungsweise Spülflüssigkeit, da die eingeleitete Spül- bzw. Kühlflüssigkeit in die Ablaufrichtung in der Vorrichtung umgelenkt wird.

Ein weiterer Aspekt der Erfindung ist dadurch angegeben, daß die Grundwanne als Gehäuse für die Spülwanne vorgesehen ist. Durch diese Ausbildung wird eine doppelte Ausführung gewährleistet und gleichzeitig vermieden, daß ein zusätzliches Gehäuse für die Grundwanne zur Verfügung gestellt werden muß. Dies senkt ebenfalls die Produktionskosten.

Eine vorteilhafte Weiterbildung der erfindungsgemäßen Produktionslinie sieht vor, daß die Grundwanne zusätzlich zumindest teilweise als Leckagewanne ausgebildet ist, derart, daß aus der Spülwanne überlaufende Kühl- beziehungsweise Spülflüssigkeit aufgefangen wird. Damit wird gewährleistet, daß auch die überlaufende Kühl- beziehungsweise Spülflüssigkeit nicht austreten kann und den Boden kontaminiert. Die Sicherheit wird durch eine derartige Anordnung weiter erhöht.

Erfindungsgemäß ist entsprechend eines weiteren Aspekts der Erfindung eine Leckageleitung vorgesehen, über die die Leckage aus der Leckagewanne ableitbar ist. Damit wird sichergestellt, daß auch die Leckage problemlos und sicher, insbesondere ohne Verschmutzungen und Kontaminationen zu verursachen abgeleitet werden kann. Bevorzugt ist die Leckageleitung dabei auf einem Niveau unterhalb des Zulaufs beziehungsweise des Zwischenstücks zur Verbindung von Auffangmodul und Vorrichtung angeordnet.

Es wurde weiter gefunden, daß es von Vorteil ist, eine zentrale Leckage-Sammelleitung parallel zur Vorrichtung anzuordnen.

Damit wird der Leckageabfluß auch dann gewährleistet, wenn das Kühl- beziehungsweise Spülflüssigkeitsniveau in der Vorrichtung selbst zu hoch ist, so daß keine Leckage abfließen könnte. Die zentrale Leckage-Sammelleitung kann dabei in ein Erweiterungsmodul oder aber in das Endmodul eingeleitet werden.

Die Erfindung ist auch dadurch gekennzeichnet, daß an der Grundwanne eine Verbindung zur Verkleidung der Produktionsmaschine zum Ableiten von der Verkleidung ablaufender Flüssigkeit vorgesehen ist.

In einer bevorzugten Ausgestaltung der Erfindung ist vorgesehen, daß die Vorrichtung im Querschnitt als einstückiges Bauteil ausgeführt ist. Erfindungsgemäß wird hierbei angestrebt, ein kostengünstiges Herstellungsverfahren für diese Module einsetzen zu können. Zum Beispiel ist es möglich, die Module der Vorrichtung rohrartig auszubilden und diese zum Beispiel in einem Roll- oder Walzverfahren zu gewinnen.

Alternativ ist vorgesehen, daß die Vorrichtung als Schweißkonstruktion ausgebildet ist, wobei die Konstruktion zumindest ein Unterteil und ein Oberteil aufweist, die durch eine Schweißung verbunden sind. Zum Beispiel bestehen Unter- und Oberteil aus entsprechend geknicktem, gekantetem oder gefaltetem Plattenmaterial, um eine entsprechende Kontur der gesamten Vorrichtung zu erreichen. Ober- und Unterteil können dabei durch ein, zwei oder mehrere, insbesondere bevorzugt längslaufende Schweißnähte verbunden sein. Die Anordnung legt sich dabei nicht fest, daß zwingend Unterteil und Oberteil in einem getrennten Bauteil vorgesehen sind. Es ist durchaus möglich, Unterteil und Oberteil jeweils in einem Abkantverfahren entsprechend zu gestalten und dann die bereits einseitig zusammenhängenden Unter- und Oberteile miteinander zu verschweißen. Der Vorteil einer Schweißkonstruktion liegt insbesondere dadurch, daß dadurch eine abgeschlossene und dichte Vorrichtung gewonnen wird.

Alternativ ist des Weiteren vorgesehen, daß die Vorrichtung aus einem Unterteil und einem auf das Unterteil aufsetzbaren, mit diesem dicht verbindbaren Oberteil besteht. Hierzu können zum Beispiel geeignete Verbindungsmittel, zum Beispiel Schrauben oder dergleichen vorgesehen sein. Insbesondere erlaubt eine solche Ausgestaltung auch eine Umnützung eines Moduls, indem einfach das Unterteil beibehalten wird, aber das Oberteil eines Verbindungsmodules durch das Oberteil eines Anschlußmodules ausgetauscht wird. In jedem Fall wird aber auch hier eine hohe Effinzienz, das heißt, eine hohe Ausnützung des für die Vorrichtung zur Verfügung stehenden Raumes in der Produktionslinie erreicht, da der Füllstand in der erfindungsgemäßen Vorrichtung höher ist als bei den offenen Rinnen, bei welchen unter Umständen ein Herausschwappen der Spül- und Kühlflüssigkeit droht. Letztendlich wird möglichst der gesamte Bereich, in dem Spülund Kühlflüssigkeit zirkuliert, gekapselt.

Gemäß der Erfindung ist vorgesehen, daß die Vorrichtung im Querschnitt rohrartig, also gegebenenfalls rund, oval, kastenförmig, also im Wesentlichen rechteckig oder rinnenartig ausgebildet ist. Insbesondere eine rinnenartige Ausgestaltung, die im oberen Bereich mit einem Oberteil verschlossen ist, ist günstig, die in dem tiefsten Punkt der Rinne als ein Späneförderer einsetzbar ist, um die hier abgelagerten Späne zu transportieren. Die Ausgestaltung des Querschnittes orientiert sich dabei insbesondere an den Gegebenheiten an der Produktionslinie bzw. der Bearbeitungsmaschine, um den gewünschten Fluß an Spül- bzw. Kühlflüssigkeit zu optimieren. Hieraus resultieren unter Umständen auch andere Gestaltungen des Querschnittes, wobei zum Beispiel nierenförmige Varianten oder dergleichen ebenfalls im Querschnitt denkbar sind.

Die Anordnung der Ausgestaltung der Module ist gemäß der Erfindung so geschickt gewählt, daß die Module bei der Montage untereinander einen Spalt besitzen, die Module aber zumindest an einem ihrer Längsenden eine Dichtung besitzen, und die Dichtung durch das Zusammenwirken der Befestigungsmittel (die zum Verbinden der Module dienen) und der Dichtung im montierten Zustand diesen Spalt verschließen. Hieraus resultiert eine leichte Montage bzw. Demontage der Vorrichtung der erfindungsgemäßen Produktionslinie, da die einzelnen Module etwas kürzer sind wie der zur Verfügung stehende Raum, und die Dichtungen den verbleibenden Spalt abdichten. Hieraus resultiert eine erhebliche Erleichterung, da flexibel auf unterschiedliche Anforderungen der Produktionslinie reagiert werden kann, da der Aufwand für das Ausbauen einer Bearbeitungsmaschine aus der Produktionslinie einschließlich einem Austausch der Vorrichtung gemäß der Erfindung einfacher und schneller erfolgt. Auch erlaubt die so ausgebildete Vorrichtung in einfacher Weise den Ausgleich von Ungenauigkeiten in Längsrichtung, da auch dies durch die Dichtung, die entsprechend zu dimensionieren ist, kompensiert wird. Die Montage- und Demontageerleichterung geht somit einher mit einem leicht realisierbaren Lageausgleich, für die Anordnung der Vorrichtung muß daher nicht mehr so hoher Genauigkeitsaufwand betrieben werden.

Erfindungsgemäß ist ein Abstützmittel für die Vorrichtung vorgesehen. Das Abstützmittel dient dazu, die Vorrichtung zu lagern. Hierzu bestehen mehrere Varianten. Zunächst ist es möglich, daß das Abstützmittel eine Abstützung der Vorrichtung an der Bearbeitungsmaschine oder dem Maschinengestell erlaubt. Gerade bei einem prinzipiell modulhaften Aufbau ist dies vorteilhaft. Geschickterweise wird dabei zum Beispiel das Anschlußmodul im Bereich der Bearbeitungsmaschine an dieser abgestützt und die Anschlußflansche zu den anschließenden Verbindungsmodulen etwas außerhalb der Bearbeitungsmaschine angeordnet, wodurch der Ein- und Ausbau der kompletten Bearbeitungsmaschine zum Beispiel bei der Umstellung der Produktionslinie einfach möglich ist. Dabei hängt das jeweilige Modul durch seine Abstützung an der Bearbeitungsmaschine und muß nicht noch separat demontiert werden. Dabei ist es möglich, daß die Vorrichtung an der Bearbeitungsmaschine bzw. an dem Maschinengestell aufgehängt oder aufgeständert bzw. aufgestützt ist.

Alternativ ist es natürlich möglich, als Abstützmittel auf dem Boden aufgestellte Stellfüße einzusetzen. Insbesondere kann ein solches Abstützmittel in einem Bereich, in welchem eine Aufhängung an der Maschine nicht möglich ist, günstig sein.

Von Vorteil ist, daß ein längen- bzw. höheneinstellbares Abstützmittel vorgesehen ist. Zum einen kann damit die genaue Positionierung der Vorrichtung in der Produktionslinie eingestellt werden. Des Weiteren ist darauf zu achten, daß eine geringe Neigung der Vorrichtung für einen einfachen Abfluß der Flüssigkeit besteht. Diese kann durch die Einstellbarkeit problemlos erreicht werden.

Erfindungsgemäß ist vorgesehen, daß die Bearbeitungsstation oder Bearbeitungsmaschine (wie diese nachfolgend gleichwertig bezeichnet werden) als Zerspan-, Umform-, Füge- oder Trennmaschine ausgebildet sind oder die Bearbeitungsmaschine als Prüf-, Montage-, Justage-, Oberflächenbehandlungs-, Ver- oder Entpackstation, Kennzeichnungs- oder als Reinigungsstation ausgebildet ist. Die erfindungsgemäße Bearbeitungmaschine legt sich in keinster Weise auf die in ihr stattzufindenden Bearbeitung fest. Alle vorgenannten Bearbeitungsmöglichkeiten bedingen ein Positionieren des Werkstückes. Grundsätzlich soll das Positionieren des Werkstückes möglichst zeitoptimiert und genau erfolgen, was - unabhängig von der tatsächlichen Bearbeitung - durch die Erfindung gelöst wird. Die Erfindung ist daher für die beliebigsten Zwecke einer Bearbeitungsmaschine einsetzbar. Zum einen ist es möglich, daß die Bearbeitungsmaschine tatsächlich das Werkstück bearbeitet, also zum Beispiel zerspant, umformt, fügt oder trennt. Darüber hinaus ist es aber auch von Vorteil, daß die Bearbeitungsmaschine als Prüfstation ausgebildet ist, um zum Beispiel entsprechende Bearbeitungen einer davorliegenden Bearbeitungsmaschine zu kontrollieren. Dabei ist es von Vorteil, möglichst frühzeitig entsprechende Prüfungen vorzusehen, um nicht bei der Endkontrolle, wenn eine Vielzahl von Bearbeitungen stattgefunden hat, zu erkennen, daß bereits bei einer frühzeitigen Bearbeitung ein Fehler aufgetreten ist und das ganze Werkstück Ausschuß ist. Es ist auch möglich, die Bearbeitungsmaschine als Montagestation auszubilden. Zum Beispiel ist es möglich, in eine vorher eingebrachte Bohrung das Gewinde einzuschneiden und dann in der Montagestation in diesem Gewinde ein weiteres Bauteil zu montieren. Es ist aber auch möglich, in einer Montagestation zum Beispiel einen Werkstückträgerwechsel durchzuführen, also zum Beispiel einen anderen Werkstückträger zu montieren.

Gleichwohl ist es günstig, die Montagestation zur genauen Positionierung beziehungsweise Ausrichtung des Werkstückes vorzusehen. Des weiteren ist es möglich, daß die Bearbeitungsmaschine als Oberflächenbehandlungsstation ausgebildet ist. Diese dient zum Beispiel zum Lackieren, Galvanisieren, Bedrucken usw. Als Bearbeitungsmaschinen werden auch Ver- oder Entpackstationen angesehen, die zum Beispiel das Werkstück nach Abschluß der Verarbeitung verpacken oder vor der Bearbeitung entpacken.

Des weiteren kann als Bearbeitungsmaschine auch eine Einrichtung zur Kennzeichnung von Werkstücken vorgesehen sein. In einer Kennzeichnungsstation ist vorgesehen, daß zum Beispiel Etiketten oder sonstige Kennzeichnungen, gegebenenfalls auch elektronisch auslesbare Kennzeichnungen wie Barcode oder Transponder, an das Werkstück beziehungsweise seine Werkstückträger beziehungsweise Palette angeheftet oder angebracht werden, um das jeweilige Werkstück für die Steuerung zu personifizieren. In der Regel geht dabei ein entsprechender Identifikationsschritt (allerdings nicht zwingend) voraus.

Günstig ist es dabei auch, daß als Bearbeitungsmaschine eine Reinigungsstation beziehungsweise Spül- oder Waschstation vorgesehen ist. Oftmals werden die Werkstücke während der Bearbeitung, zum Beispiel durch Kühlschmiermittel, verschmutzt, welches gerade am Ende einer entsprechenden Prozeßlinie abzuwaschen ist. Auch ist es nicht günstig, entsprechende ölhaltige Emulsionen auf den Werkstücken zu belassen, wenn nachfolgend eine Oberflächenbehandlung, wie eine Lackierung oder sonstige Beschichtung, erfolgen soll.

Die vorgenannten Bearbeitungsmaschinen sollen sowohl als automatisch arbeitende Systeme oder auch als Handarbeitsplätze im Sinne der Erfindung ausgeführt sein.

Die Erfindung ist in den Zeichnungen schematisch dargestellt. Es zeigen
- Fig. 1: in einer Draufsicht die erfindungsgemäße Produktionslinie;
- Fig. 2: in einer dreidimensionalen Ansicht eine Ausführungsform der Vorrichtung gemäß der Erfindung;
- Fig. 3: Detail der Verbindung von Auffangmodul und Vorrichtung entsprechend der Ausführungsform nach Fig. 2;
- Fig. 4: in einer dreidimensionalen Ansicht eine weitere Ausführungsform der Vorrichtung gemäß der Erfindung;
- Fig. 5: in einer Draufsicht ein Detail der Ausführungsform nach Fig. 4 und
- Fig. 6, 7 und 8: jeweils einen Schnitt durch die Variante der erfindungsgemäßen Vorrichtung nach Fig. 4.

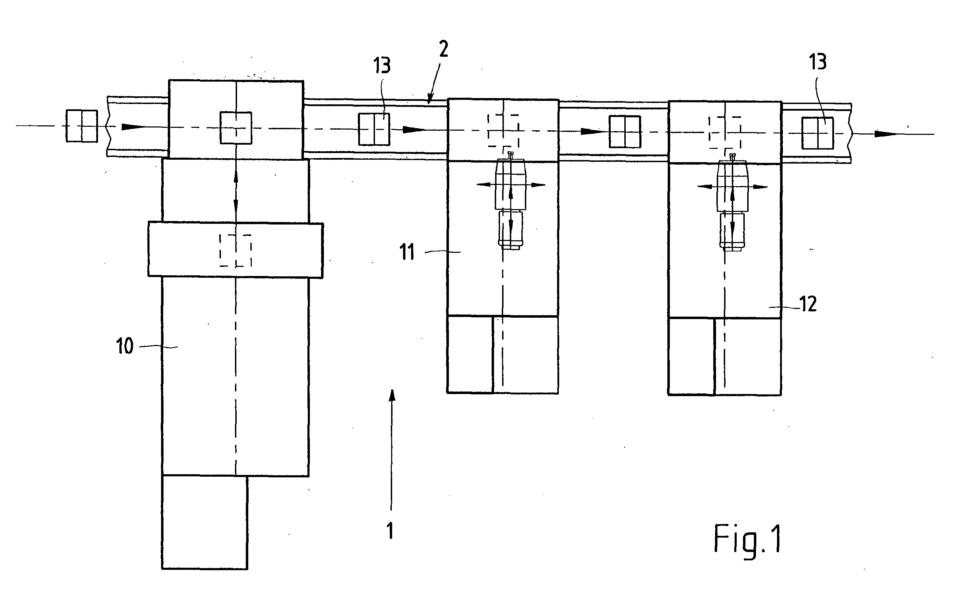

In Fig. 1 ist eine schematische Produktionslinie 1 nach der Erfindung gezeigt.

Die Güter 13 werden in einer Transportbahn in Pfeilrichtung bewegt. Es sind mehrere unterschiedliche Bearbeitungsmaschinen 10, 11, 12 vorgesehen. Zwischen den Bearbeitungsmaschinen 10, 11, 12 ist die Vorrichtung 2 für die Leitung von Spül-/Kühlflüssigkeit angeordnet. Sie befindet sich in Fig. 1 unterhalb der Transportbahn, auf welcher die Güter 13 transportiert werden.

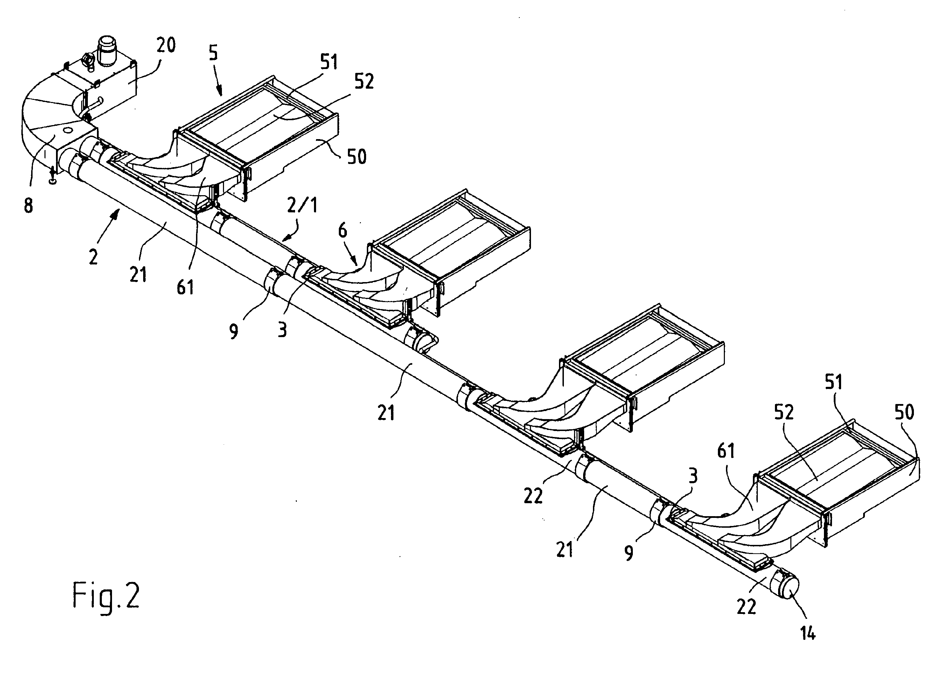

Die Figur 2 zeigt in einer dreidimensionalen Ansicht eine Ausführungsform der Vorrichtung gemäß der Erfindung. Dabei handelt es sich um eine sehr vorteilhafte Ausführungsform, bei der die Vorrichtung 2 rohrförmig ausgebildet ist. Die Vorrichtung selbst besteht aus mehreren aneinandergefügten Modulen 20, 8, 21 und 22. Am Beginn der rohrförmig ausgebildeten Vorrichtung 2 ist ein Anschlußmodul 22 vorgesehen, welches mit einem Verschluß 14 verschlossen ist. An dieses Anschlußmodul 22 schließt sich ein rohrförmiges Verbindungsmodul 21 an. Dann folgt wieder ein Anschlußmodul 22, ein Verbindungsmodul 21 sowie ein weiteres Verbindungsmodul 21. Am Ende des ersten Teils der Vorrichtung 2 ist ein Erweiterungsmodul 8 vorgesehen, in das mehrere Vorrichtungen 2, 2/1 einbindbar sind. Die Darstellung beschränkt sich lediglich auf zwei Einbindungen. Selbstverständlich ist es nach der Erfindung möglich, eine Vielzahl von Vorrichtungen 2 in einem solchen Erweiterungsmodul einzubinden. Das Erweiterungsmodul 8 ist dabei segmentartig abgewinkelt ausgebildet. Die Abwinklung ist beispielsweise erforderlich, um den Spül- bzw. Kühlmittelfluß in eine gewünschte Richtung zu lenken. Am Ende des Erweiterungsmoduls 8 schließt sich ein Endmodul 20 an, welches beispielsweise Förder- bzw. Pumpanlagen enthalten kann, mittels derer die dort ankommende Spül- bzw. Kühlflüssigkeit in eine zentrale Aufbereitungsanlage bzw. in einen Sammelbehälter geleitet bzw. gepumpt werden kann. Auch hier ist die Erfindung keineswegs beschränkt.

An den Verbindungsmodulen bzw. am Anschluß 3 des Verbindungsmoduls 22 ist jeweils ein Auffangmodul 5 vorgesehen. Das Auffangmodul 5 ist über Zuläufe 6, welche bevorzugt als abgewinkelte Zwischenstücke 61 ausgebildet sind, mit der Vorrichtung 2 bzw. 2/1 verbunden. Die Vorrichtung 2/1 befindet sich im zweiten Teil (linken Teil der Darstellung) parallel zur Vorrichtung 2 und bindet ebenfalls in das Erweiterungsmodul 8 ein. Das Auffangmodul 5 ist dabei von einer Grundwanne 50 gebildet, in der eine Spülwanne 51 angeordnet ist. Die Spülwanne 51 hat einen Einleitungsbereich 52, der, wie ersichtlich, W-förmig abgewinkelt ausgebildet ist. Damit wird ein einwandfreies Ablaufen der Spül- bzw. Kühlflüssigkeit gewährleistet und gleichzeitig bewirkt, daß die einmal abgelaufene Spül- bzw. Kühlflüssigkeit nicht mehr aus dem Ableitungskreislauf ablaufen bzw. herausspritzen kann. Eine Kontamination des Umfeldes des Einleitungsbereiches bzw. des Umfeldes der Grundwanne 50 wird damit sicher vermieden, da die Grundwanne 50 unterhalb eines Einleitungsbereiches der Bearbeitungsmaschine, welcher nicht dargestellt ist, angeordnet ist. Zusätzlich können am Rand der Grundwanne 50 Dichtungen vorgesehen sein, die für eine entsprechende Dichtigkeit sorgen. Die Ausbildung der Grundwanne in einer zweiteiligen Form mit einer integrierten Spülwanne 51 gewährleistet eine sogenannte doppelte Sicherheit für die Vermeidung von Verunreinigungen bzw. Kontaminationen des Hallenbodens bzw. der Aufstellfläche. Die einzelnen Module 21 und 22 sowie der Verschluß werden mit Kupplungen, bevorzugt Schnellkupplungen, aneinandergefügt. Zwischen den Kupplungen 9 sind selbstverständlich entsprechende Dichtungen vorgesehen, so daß auch hier eine einwandfreie Abdichtung gewährleistet ist. Der Vorteil der dargestellten Ausführungsform nach der Erfindung ist derart, daß es möglich ist, eine erste Gruppe von Bearbeitungsmaschinen an einer ersten, rohrförmigen Vorrichtung 2, anzuschließen. Die Darstellung zeigt auch, daß es möglich ist, zwei oder mehrere Gruppen je an eine eigene Vorrichtung, bevorzugt getrennt von anderen Vorrichtungen 2, 2/1 anzuschließen und daß diese Vorrichtungen zumindest abschnittsweise parallel, insbesondere gebündelt verlaufend, angeordnet sind. Diese Ausführungsform ist äußerst vorteilhaft und senkt den Kostenaufwand für die Herstellung derartiger Vorrichtungen nicht unerheblich.

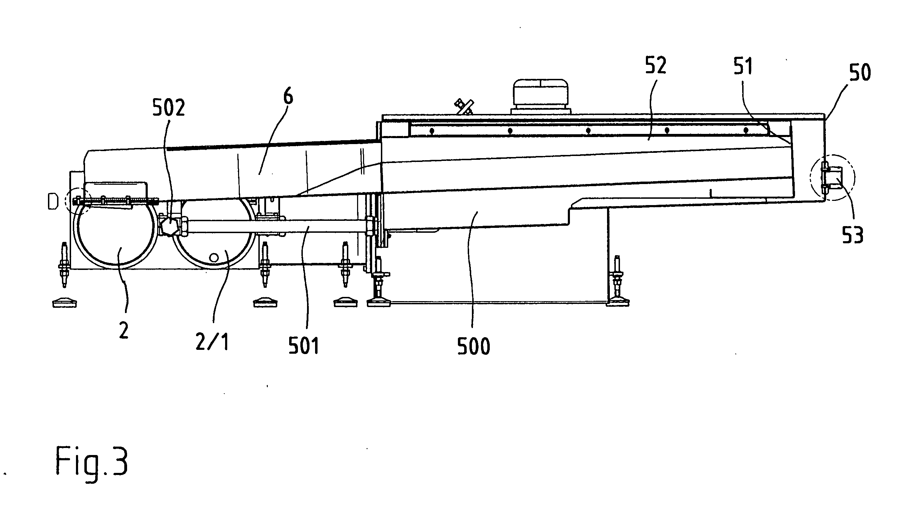

Die Fig. 3 zeigt ein Detail der Verbindung von Auffangmodul 5 und Vorrichtung 2 entsprechend der Ausführungsform nach der Fig. 2. In der Grundwanne 50 ist eine Spülwanne 51 angeordnet. Der Einleitungsbereich 52 ist dabei (hier nicht ersichtlich) W-oder V- förmig abgewinkelt ausgebildet, insbesondere ist die Spülwanne 51 in der Grundwanne 50 zur Vorrichtung 2 bzw. 2/1 hin leicht geneigt ausgebildet. Auch der Zulauf 6 besitzt eine geringfügige Neigung, die jedoch ausreicht, um die Spül- bzw. Kühlflüssigkeit sicher in die Vorrichtung 2 einzuleiten. Unterhalb der Spülwanne 51 befindet sich eine Leckagewanne 500, die Teil der Grundwanne 50 ist. Auch diese Leckagewanne 500 besitzt ein leichtes Gefälle zur Vorrichtung 2 bzw. 2/1 hin. Die gesammelte Spül- bzw. Kühlflüssigkeit wird über eine Leckageleitung 501 in eine zentrale Leckageleitung 502 eingeleitet. Diese zentrale Leckageleitung 502 kann dann in ein Erweiterungsmodul 8 oder in das Endmodul 20 geführt werden, um die Leckage sicher dorthin abzuführen. Wie aus der Fig. 3 ersichtlich, ist das Niveau des Leckageabflußes bzw. die Anordnung der Leckageleitung 501 so vorgesehen, daß es sich unterhalb des Zulaufs 6 für die von der Spülwanne aufgefangene Spül- bzw. Kühlflüssigkeit befindet. Eine zusätzliche Leckageleitung ist auch deshalb erforderlich, um ständig einen sicheren Abfluß der aufgefangenen Leckage zu erleichtern. Wie aus der Fig. 3 ersichtlich, ist es gegebenenfalls möglich, daß das Flüssigkeitsniveau in den Vorrichtungen 2 bzw. 2/1 so hoch ist, daß die Leckage nicht ablaufen könnte bzw. es ohne ein entsprechendes Rückschlagventil möglich wäre, daß Spül- bzw. Kühlflüssigkeit in die Leckagewanne 500 gedrückt werden würde. Um dies sicher zu vermeiden, ist eine zentrale Leckageleitung 502 vorgesehen, um die Leckage sicher, auch bei zu hohem Flüssigkeitsniveau in den Vorrichtungen 2 bzw. 2/1 abzuführen. An der Grundwanne 50 befindet sich eine Verbindung 53 zur Verkleidung der nicht dargestellten Produktionsmaschine. Diese Verbindung 53 dient zum Ableiten von an der Verkleidung ablaufender Flüssigkeit. Damit ist insgesamt ein sicherer Abfluß von austretender bzw. ablaufender oder abspritzender Spül- bzw. Kühlmittelflüssigkeit gewährleistet.

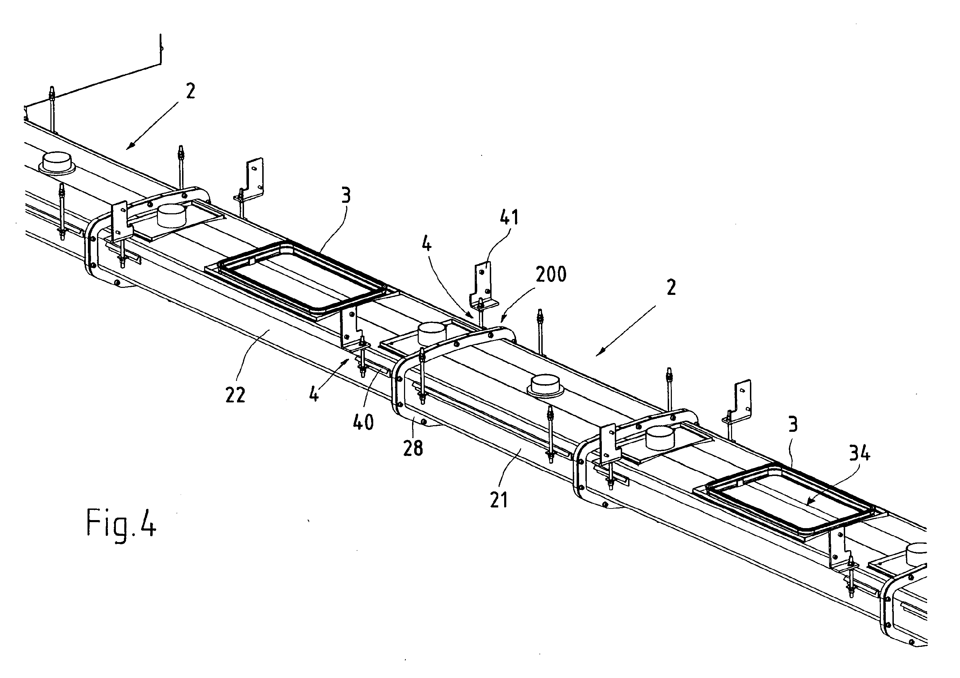

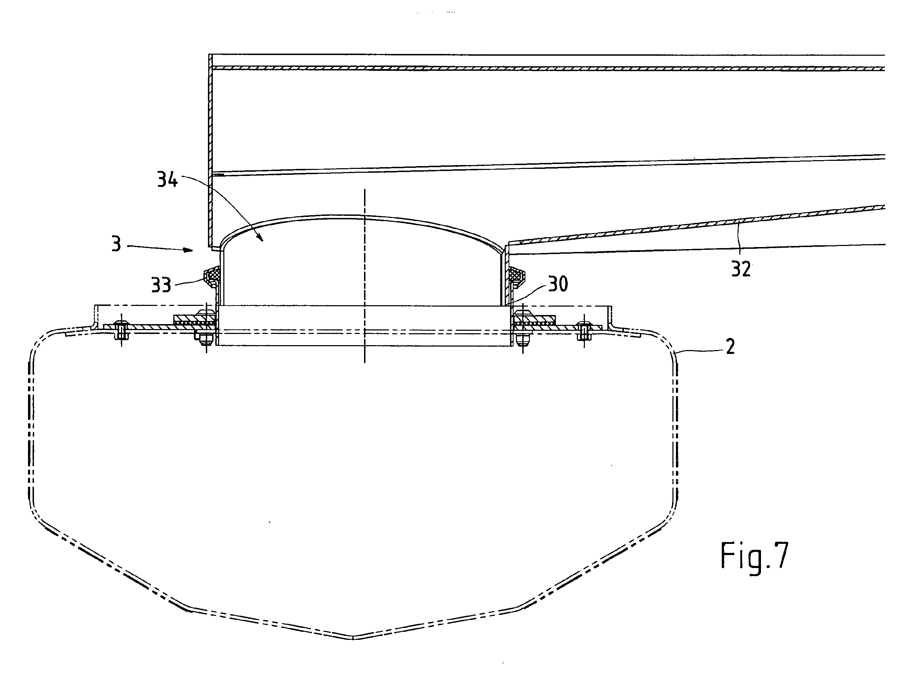

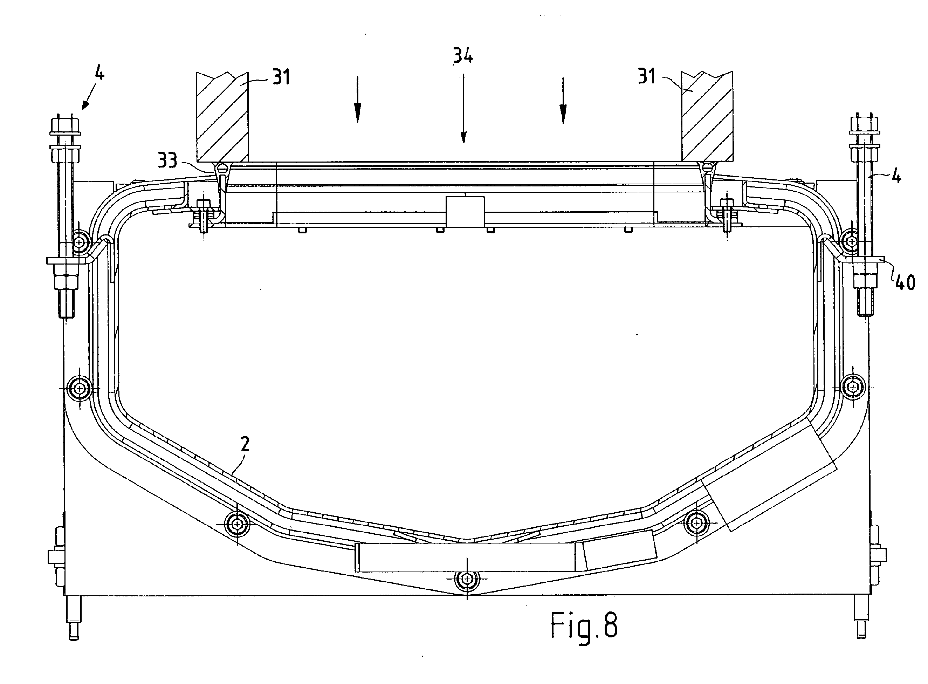

In Fig. 4 ist eine Variante der Vorrichtung 2 gemäß der Erfindung übersichtlicher dargestellt. Die Vorrichtung 2 ist dabei aus einer Mehrzahl von Modulen aufgebaut. Verbindungsmodule 21 sind dabei zwischen Anschlußmodulen 22 angeordnet. Die Anschlußmodule 22 befinden sich dabei bevorzugt im Bereich der Bearbeitungsmaschinen, da diese einen Anschluß 3 aufweisen, der dazu dient, den Spänesammeltrichter 31 (siehe Fig. 8) oder die Spülrinne 32 (nach Fig. 7) anzuschließen, durch die entsprechende Spül- und Kühlflüssigkeiten gegebenenfalls einschließlich Späne, Abrieb oder sonstigen Verunreinigungen aus der Bearbeitungsmaschine abtransportiert werden. Im Bereich des Anschlußes 3 erstreckt sich demnach eine Öffnung 34, durch die Zugang in das Innere der Vorrichtung 2 besteht.

Die Module weisen endseitig jeweils einen Flansch 28 und einen Gegenflansch 200 auf, wobei der Flansch 28 des ersten Modules mit dem Gegenflansch 200 des zweiten Modules zum Verbund der Module zusammenwirkt. Zwischen den Flanschen ist eine Dichtung 25 vorgesehen.

Die dargestellte Variante der Vorrichtung nach der erfindungsgemäßen Produktionslinie besitzt Abstützmittel 4, durch welche die Vorrichtung gehalten wird. Dabei umfaßt das Abstützmittel 4 eine Tragplatte 40, die bevorzugt an der Vorrichtung 2 an der Außenseite angeordnet, zum Beispiel aufgeschweißt, aufgeschraubt oder aufgenietet ist. Das Abstützmittel 4 ist zum Beispiel als Schraubenelement zum Beispiel als Gewindestab oder dergleichen ausgebildet und erlaubt in das entsprechende Gewinde der Tragplatte 40 eingedreht zu werden. Für den Anschluß der Vorrichtung 2 an der Bearbeitungsmaschine 10 oder an sonstigen Elementen, ist in Fig. 1 eine Anschlußplatte 41 abgebildet. Gegebenenfalls können auch Hilfsgestelle zur Aufnahme der Anschlußplatte 41 vorgesehen sein, die von dem Maschinengestell oder der Bearbeitungsmaschine 10, 11, 12 unabhängig sind.

Auch die Anschlußplatte 41 besitzt zum Beispiel ein Gewinde, welches mit dem Schraubgewinde des Abstützmittels zusammenwirkt. Durch Verdrehen des Abstützmittels ist hiermit eine Höhenverstellung bzw. eine Einstellbarkeit gegeben, die insbesondere auch zur Feinjustage des Gefälles der Vorrichtung dient.

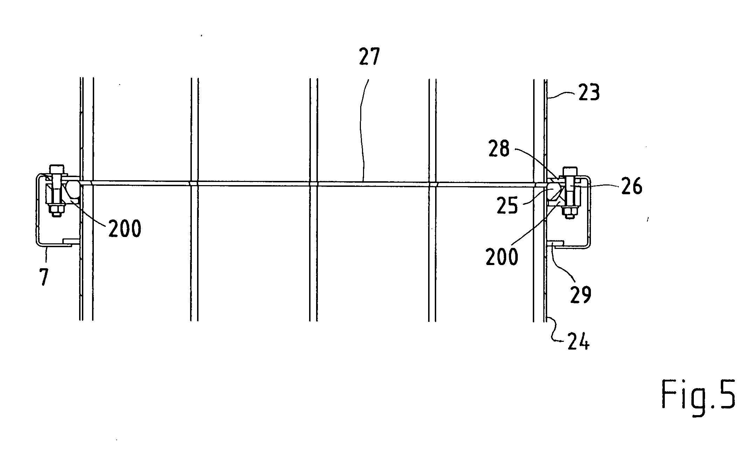

In Fig. 5 ist in einem Detail der Verbindungsbereich zweier benachbart angeordneter Module 23 und 24 der Ausführungsform der Fig. 4 gezeigt. Das erste Modul 23 besitzt dabei endseitig einen rechtwinklig zur Längserstreckung des Moduls vorstehenden Flansch 28. Wie gezeigt ist der Flansch 28 am äußersten Ende des ersten Modules 23 angeordnet.

Das zweite Modul 24 besitzt einen Gegenflansch 200, der abgewinkelt ausgebildet ist und etwas gegenüber dem Ende des Moduls zurückgesetzt an diesem anschließt. Daraus ergibt sich eine umlaufende U- oder V-förmige Nut die dafür vorgesehen ist, die Dichtung 25 aufzunehmen.

Der Gegenflansch 200 nimmt die Befestigungsmittel 26 auf, die den Flansch 28 mit dem Gegenflansch 200 verbinden. Die Dichtung 25 ist dabei so bemessen, daß diese im demontierten Zustand aus der Ausnehmung, in welche sie eingelegt wird, heraussteht.

Bei der Montage der Module 23, 24 verbleibt dabei zunächst ein Spalt 27, der das Einsetzen der Module rechtwinklig zur Längserstreckung der Module ermöglicht und erleichtert. Diese Spalt 27 wird dann durch das Zusammenwirken der Befestigungsmittel 26, hier Schrauben und Muttern, und der Dichtung 25 verschlossen. Durch die feste Verbindung mit den Befestigungsmitteln 26 wird dabei die Dichtung 25 so in die Aufnahme hineingepreßt, daß diese sicher an den Wandungen der Ausnehmung anliegt und diese abdichtet. Des Weiteren preßt sich der Flansch 28 vollumfänglich auf die Dichtung 25 und verschließt auch hier mögliche Spalte. Es entsteht eine dichte Verbindung zwischen den beiden Modulen 23 und 24, wobei für die Montage ein Manipulationsspalt 27 zur Verfügung steht.

Dabei wird die Dichtung 25 so gewählt, daß auch Montagetoleranzen, zum Beispiel unterschiedliche Winkel- oder Höhenlagen und so weiter ausgleichbar sind, ohne dabei die gesamte Dichtheit der Vorrichtung zu gefährden.

Neben der Verwendung von Befestigungsmitteln 26 zum Verbinden der Module ist es auch möglich, bekannte Spannringe, wie sie zum Beispiel für den Verschluß von Stahlfässern bekannt sind, einzusetzen. Durch die geschickte Anordnung der Flansche und die Ausgestaltung der Flansche werden dabei beim Schließen des Spannringes ebenfalls die Flansche aufeinandergepreßt und die Dichtung zur Abdichtung der Vorrichtung dazwischen komprimiert.

In Fig. 5 ist auch gezeigt, daß an dem Befestigungsmittel 26 eine Stützanordnung 7 anschließt, die dazu dient, zum Beispiel ein Endmodul (20) oder auch ein anderes Modul zu befestigen. Um zum Beispiel ein Abkippen des Modules 24 zu vermeiden, wird die Stützanordnung 7 eingesetzt. Die Stützanordnung 7 besteht hierbei aus einer Mehrzahl im Wesentlichen C-förmiger Profilabschnitte, wobei ein erster Schenkel dieses Profiles auf dem Flansch 28 aufliegt und der zweite Schenkel des C-Profiles auf einem Kragen 29 des zweiten Moduls 24 anliegt. Der Kragen 29 ist dabei bezüglich des Gegenflansches 200 noch weiter vom Modulrand zurückgesetzt. Der Flansch 28, der Gegenflansch 200 und/oder der Kragen 29 sind dabei auf den jeweiligen Modulen 21, 22, 23, 24 zum Beispiel durch eine Schweißverbindung aufgebracht.

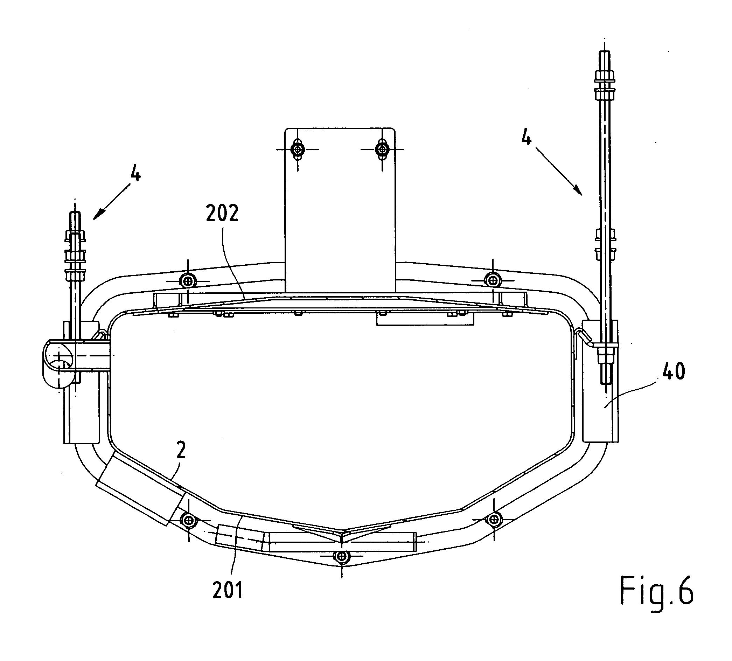

In Fig. 6 ist der bevorzugt eingesetzte Querschnitt der Ausführungsvariante der Fig. 4 der Vorrichtung 2 gezeigt. Es handelt sich dabei um eine im Unterteil 201 rinnenartig ausgestaltete Vorrichtung 2, die durch ein plattenartiges Oberteil 202 verschlossen ist. Die Vorrichtung 2 kann dabei einstückig ausgebildet sein oder aber durch entsprechende Konstruktion und Montage aus mehreren Einzelteilen zusammengesetzt entstehen. Dabei kann es günstig sein, daß das Unterteil 201 getrennt von dem Oberteil 202 produziert und dann zum Beispiel miteinander verschraub oder verschweißt wird. An der Tragplatte 40 schließt das Abstützmittel 4 an, welches höhen- bzw. längenverstellbar und einstellbar ist.

In Fig. 7 ist ein weiteres Ausführungsbeispiel der Erfindung gezeigt. In diesem Fall schließt an den Anschluß 3 eine Spülrinne 32 an. Die Spülrinne weist an ihrem hinteren Ende einen Rohrstutzen auf, der in den Flansch 30 des Anschlußes 3 einsteht.

Gemäß der Erfindung ist vorgesehen, daß der Anschluß 3 beliebig ausbildbar ist, er kann dabei trichterartig, flanschartig, rechteckig, rund und so weiter ausgebildet sein.

An dem Flansch 30 ist eine endseitige Umbörtelung vorgesehen, die eine Umfangsrille ergibt, in die die Anschlußdichtung 33 einlegbar ist. Zum Abdichten dieses Bereiches bestehen mehrere Möglichkeiten. Zum Beispiel kann in einer ersten Variante vorgesehen sein, daß die Dichtung 33 in entsprechenden Anschlägen geführt ist und bei Andrücken der Vorrichtung 2 gegen die Spülrinne 32 die Dichtung 33 so komprimiert wird, daß diese abdichtet.

In der anderen Variante, wie sie hier gezeigt ist, liegt die Dichtung 33 aufgrund ihrer eigenen Elastizität an dem eingeschobenen Rohr der Spülrinne 32 abdichtend an. Dies ist insbesondere günstig, da diese Anordnung auch einen Höhenausgleich der Vorrichtung 2 bezüglich der Spülrinne 32 problemlos erlaubt.

Neben der im Wesentlichen runden Ausgestaltung des Anschlußes 3 nach Fig. 7 ist in Fig. 8 eine im Wesentlichen eckige Ausgestaltung vorgesehen. In diesem hier gezeigten Ausführungsbeispiel wirkt der Anschluß 3 der Vorrichtung 2 zusammen mit einem trichterförmigen Spänesammler. Der Trichter ist dabei zum Beispiel rechteckig ausgebildet. Die Dichtung 33 besitzt hier auch, verglichen mit der Ausgestaltung nach Fig. 7, eine andere Gestaltung. In Fig. 7 wird eine im Querschnitt zylindrische, aus Vollmaterial bestehende Dichtung eingesetzt. Das in Fig. 8 eingesetzte Dichtungsprofil ist etwas aufwendiger, da dieses einen U-förmigen Aufbau aufweist, durch welchen die Dichtung auf den oberen Rand des Anschlußes 3 aufsetzbar ist. Es schließt sich dann ein mit endseitig mit mehreren Dichtlippen ausgestatteter, elastischer Bereich an, der mit dem unteren Bereich des Trichters 31 abdichtet. Hierzu ist es notwendig, daß die Vorrichtung 2 von unten gegen den Trichter 31 gedrückt wird, was problemlos durch das Abstützmittel 4 erreichtbar ist.

Gemäß der Erfindung ist dabei vorgesehen, daß an dem Anschluß 3 eine Anschlußdichtung 33 vorgesehen ist, die gegebenenfalls als Endlosdichtung, zum Beispiel als O-Ring-Dichtung, nach Fig. 7, oder als Dichtschnur oder als Dichtprofil, wie in Fig. 8, ausgebildet ist.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Produktionslinie, bestehend aus mindestens zwei auf dem Boden stehenden Bearbeitungsmaschinen, wobei zumindest zwischen den beiden Bearbeitungsmaschinen eine Vorrichtung für die Ableitung von Spül- bzw. Kühlflüssigkeit vorgesehen ist, **dadurch gekennzeichnet, dass** die Vorrichtung (2) im wesentlichen abgeschlossen und dicht ausgebildet ist, im Bereich der Bearbeitungsmaschine Anschlüsse (3) vorgesehen sind und die Vorrichtung (2) auf dem Boden oder über dem Niveau der Aufstellfläche der Bearbeitungsmaschinen angeordnet ist.

2. Produktionslinie nach Anspruch 1, **dadurch gekennzeichnet, dass** die Vorrichtung (2) modular ausgebildet ist und/oder die Vorrichtung (2) als Aufflurkonstruktion auf dem Boden, insbesondere unterhalb der Bearbeitungsmaschine, aufstellbar ausgebildet ist.

3. Produktionslinie nach einem oder beiden der vorhergehenden Ansprüche, **dadurch gekennzeichnet, dass** die Vorrichtung (2) rohrförmig ausgebildet ist.

4. Produktionslinie nach einem oder mehreren der vorhergehenden Ansprüche, **dadurch gekennzeichnet, dass** eine erste Gruppe von einigen Bearbeitungsmaschinen an einer ersten, insbesondere rohrförmigen Vorrichtung, angeschlossen ist.

5. Produktionslinie nach einem oder mehreren der vorhergehenden Ansprüche, **dadurch gekennzeichnet, dass** zwei oder mehrere Gruppen je an eine eigene, bevorzugt getrennt von den anderen Vorrichtungen (2, 2/1), Vorrichtung (2) angeschlossen ist und diese Vorrichtungen zumindest abschnittsweise parallel, insbesondere gebündelt verlaufend, angeordnet sind.

6. Produktionslinie nach einem oder mehreren der vorhergehenden Ansprüche, **dadurch gekennzeichnet, dass** ein Erweiterungsmodul (8) zum Anschluss von zwei bzw. mehreren Vorrichtungen (2, 2/1) vorgesehen ist und/oder das Erweiterungsmodul (8) abgewinkelt, insbesondere segmentartig abgewinkelt ausgebildet ist.

7. Produktionslinie nach einem oder mehreren der vorhergehenden Ansprüche, **dadurch gekennzeichnet, dass** ein Endmodul (20) vorgesehen ist, welches alle Vorrichtungen (2, 2/1) der Produktionslinie aufnimmt und/oder die Anschlüsse (3) im Bereich der Bearbeitungsmaschinen durch Zuläufe (6) mit der Vorrichtung (2) verbunden sind.

8. Produktionslinie nach einem oder mehreren der vorhergehenden Ansprüche, **dadurch gekennzeichnet, dass** ein Auffangmodul (5) zur Verbindung der Vorrichtung (2) mit der Bearbeitungsmaschine vorgesehen ist.

9. Produktionslinie nach einem oder mehreren der vorhergehenden Ansprüche, **dadurch gekennzeichnet, dass** das Auffangmodul (5) als Grundwanne (50) ausgebildet ist, in das die Spül- oder Kühlflüssigkeit einleitbar ist.

10. Produktionslinie nach einem oder mehreren der vorhergehenden Ansprüche, **dadurch gekennzeichnet, dass** die Grundwanne (50) zweiteilig, insbesondere als Ausführung mit einer Spülwanne (51) in der Grundwanne (50) vorgesehen ist.

11. Produktionslinie nach einem oder mehreren der vorhergehenden Ansprüche, **dadurch gekennzeichnet, dass** die Spülwanne (51) zumindest im Einleitungsbereich (52) für die Spül- bzw. Kühlflüssigkeit bzw. auf der der Bearbeitungsmaschine zugewandten Seite W-förmig ausgebildet ist und/oder die Spülwanne (51) bzw. die Grundwanne (50) in Richtung der Vorrichtung (2) geneigt, insbesondere gering geneigt ausgebildet ist.

12. Produktionslinie nach einem oder mehreren der vorhergehenden Ansprüche, **dadurch gekennzeichnet, dass** der W-förmige Einleitungsbereich (52) der Spülwanne (51) von zwei V-Rinnen gebildet ist und/oder der Zulauf (6) als abgewinkeltes Zwischenstück (61) zur Verbindung mit der Vorrichtung (2) vorgesehen ist.

13. Produktionslinie nach einem oder mehreren der vorhergehenden Ansprüche, **dadurch gekennzeichnet, dass** die Grundwanne (50) als Gehäuse für die Spülwanne (51) vorgesehen ist.

14. Produktionslinie nach einem oder mehreren der vorhergehenden Ansprüche, **dadurch gekennzeichnet, dass** die Grundwanne (50) zusätzlich zumindest teilweise als Leckagewanne (500) ausgebildet ist, derart, dass aus der Spülwanne (51) überlaufende Spül- bzw. Kühlflüssigkeit aufgefangen wird.

15. Produktionslinie nach einem oder mehreren der vorhergehenden Ansprüche, **dadurch gekennzeichnet, dass** eine Leckageleitung (501) vorgesehen ist, über die Leckage aus der Leckagewanne (500) ableitbar ist und/oder die Leckageleitung (501) auf einem Niveau unterhalb der Spülwanne (51) bzw. des Zulaufs (6) angeordnet ist und/oder eine zentrale Leckage-Sammelleitung (502) parallel zur Vorrichtung (2) angeordnet ist.

16. Produktionslinie nach einem oder mehreren der vorhergehenden Ansprüche, **dadurch gekennzeichnet, dass** an der Grundwanne (50) eine Verbindung (53) zur Verkleidung der Produktionsmaschine zum Ableiten von an der Verkleidung ablaufender Flüssigkeit, vorgesehen ist.

17. Produktionslinie nach einem oder mehreren der vorhergehenden Ansprüche, **dadurch gekennzeichnet, dass** im Wesentlichen geschlossene, profilartige Verbindungsmodule (21) vorgesehen sind.

18. Produktionslinie nach einem oder mehreren der vorhergehenden Ansprüche, **dadurch gekennzeichnet, dass** Anschlußmodule (22) mit mindestens einem Anschluß (3) vorgesehen sind und/oder die Vorrichtung (2) im Querschnitt als einstückiges Bauteil ausgeführt ist.

19. Produktionslinie nach einem oder mehreren der vorhergehenden Ansprüche, **dadurch gekennzeichnet, dass** die Vorrichtung als aus zumindest einem Unterteil (201) und einem Oberteil (202) bestehenden Schweißkonstruktion ausgebildet ist und/oder die Vorrichtung (2) aus einem Unterteil (201) und einem auf das Unterteil (201) aufsetzbaren, mit diesem dicht, zum Beispiel durch Schrauben verbindbaren Oberteil (202) besteht und/oder die Vorrichtung (2) im Querschnitt rund, oval, kastenförmig oder rinnenartig ausgebildet ist.

20. Produktionslinie nach einem oder mehreren der vorhergehenden Ansprüche, **dadurch gekennzeichnet, dass** die Module durch Befestigungsmittel (26), wie einem Spannring, einer Schraubverbindung oder dergleichen, verbindbar sind und/oder an dem Befestigungsmittel (26) eine Stützanordnung (7) für ein zu befestigendes Modul, insbesondere ein Endmodul (20), vorgesehen ist und/oder das Modul (21, 22, 23, 24) an zumindest einem seiner Längsenden eine Dichtung (25) trägt und bei der Montage der Module (21, 22, 23, 24) zumindest ein Spalt (27) verbleibt, der durch das Zusammenwirken der Befestigungsmittel (26) und der Dichtung (25) im montierten Zustand verschlossen ist.

21. Produktionslinie nach einem oder mehreren der vorhergehenden Ansprüche, **dadurch gekennzeichnet, dass** der Anschluß (3) trichterartig, flanschartig, rechteckig oder rund ausgebildet ist und/oder an dem Anschluß (3) eine Anschlußdichtung (33), insbesondere als Endlosdichtung oder als Dichtschnur vorgesehen ist und/oder an dem Anschluß (3) ein Spänesammeltrichter (31) oder eine Spülrinne (32) der Bearbeitungsmaschine (10) anschließbar ist.

22. Produktionslinie nach einem oder mehreren der vorhergehenden Ansprüche, **gekennzeichnet durch** ein Abstützmittel (4) der Vorrichtung (2) und/oder ein längen- bzw. höheneinstellbares Abstützmittel (4).

23. Produktionslinie nach einem oder mehreren der vorhergehenden Ansprüche, **dadurch gekennzeichnet, dass** als Abstützmittel (4) eine Abstützung an der Bearbeitungsmaschine (10) bzw. dem Maschinengestell dient und/oder durch das Abstützmittel (4) die Vorrichtung (2) an der Bearbeitungsmaschine (10) bzw. dem Maschinengestell aufgehängt oder abgestützt ist und/oder als Abstützmittel (4) auf dem Boden aufgestellte Stellfüße dienen.

24. Produktionslinie nach einem oder mehreren der vorhergehenden Ansprüche, **dadurch gekennzeichnet, dass** die Bearbeitungsmaschine als Zerspan-, Umform-, Füge- oder Trennmaschine ausgebildet oder die Bearbeitungsmaschine als Prüfstation, Montagestation, Justagestation, Oberflächenbehandlungsstation, Ver- oder Entpackstation, Kennzeichnungsstation oder als Reinigungsstation ausgebildet ist.
